# EUROPEAN PATENT SPECIFICATION

(11) **EP 1 783 028 B1**
(45) Date of publication and mention of the grant of the patent: **02.12.2009**
(21) Application number: 06022143.9
(22) Date of filing: 23.10.2006
(51) Int. Cl.: B62B 7/08

(54) **Foldable baby stroller**
Klappbarer Kinderwagen
Poussette d'enfant pliable

(30) Priority: 02.11.2005 CN 200520066974 U
(43) Date of publication of application: 09.05.2007
(73) Proprietor: LINK TREASURE LIMITED, Tortola, British Virgin Islands (GB)
(72) Inventor: You, Youn-Fu, Chang Hua City (TW); Wu, Tse-Chien, Ling-Ya District Kaohsiung City (TW); Li, Wei-Yeh, Jen-Der Hsian Tainan County (TW)
(74) Representative: TER MEER - STEINMEISTER & PARTNER GbR

(56) References cited:
- EP-A2- 1 086 876
- GB-A- 2 074 106
- JP-A- 2002 002 497
- US-A- 4 741 551
- US-A- 5 938 229

## Description

### FIELD OF THE INVENTION

The invention relates to a foldable baby stroller frame and, in particular, to a stroller frame, which can be in either a fixedly expanded or a collapsed state.

### DESCRIPTION OF THE PRIOR ART

Conventional baby stroller frame generally consists of several rods which pivots to one another to form as a linkage mechanism. A releasing device controls a hinge set disposed between the rods to allow a latch mechanism to operate releasing or locking either the stroller to be in an expanded or a collapsed state. As mentioned above, the stroller can be in a fixedly expanded state for conveying babies or reduce for saving space; however, the linkage mechanism is quite complicated with plenty procedure of difficulties and is awkward to handle while folding the stroller, such as the mechanism as disclosed as US Patent No. 5,772,235.

JP 2002-002497 A discloses a foldable baby stroller according to the preamble of claim 1 having a telescopically adjustable pushing rod wherein the pushing rod is also used to initiate the folding process. The telescopically movable elements of the pushing rod are locked with respect to one another by a locking means acting between the inner and outer telescope tube. In order to release the locking member a slide provided inside the inner tube is pulled by a Bowden pull wire. The locking member is engaged in a slide guide slot provided in the adjustment slide and is moved from the locking state in an unlocking state when the Bowden pull wire is pulled.
EP 1 086 876 A2 discloses a foldable baby stroller according to the preamble of claim 1 with a handle bar, a front support and a rear support. The front support is connected at its lower end to a front wheel set and at its upper end to a sliding sleeve. The sliding sleeve guides the handle bar. The lower end of the handle bar is pivotably connected to a first end of a linking rod. The second end of the linking rod is pivotably connected to the rear support. The rear support is provided at its one end with a rear wheel set and Is at its other end pivotably connected to the front support via a holder which is fixedly mounted to the front support. A locking member is provided between the handle bar and the holder of the front support. Inside of the handle bar there is provided a releasing mechanism for the locking member. The releasing mechanism comprises a slide block which can be pulled by a Bowden pull wire. When the sliding block is pulled the locking member is moved from its blocking state to its unblocking state.

### SUMMARY OF THE INVENTION

In order to resolve the above-mentioned problem, the present invention provides a foldable baby stroller according to the subject-matter of claim 1. Through such simple connecting, when a sliding sleeve slipping down via a handle bar for folding, the linking rod is forced to rotate at the same time and also drive the rear support to draw close to the front support to be in a folded state. This simple and effective foldable baby stroller can achieve the goal of easy assembly and smoothly collapsed.

Further scope of the applicability of the present invention will become apparent from the detailed description given hereinafter. However, it should be understood that the detailed description and specific examples, while indicating preferred embodiments of the invention, are given by way of illustration only.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:

FIG. 1 is a perspective view of the stroller in an expanded state according to the present invention;

FIG. 2 is a schematic view of the releasing device of the present invention;

FIG. 3 is a schematic view showing the movement of the releasing device of the present invention;

FIG. 4 is a side view of the stroller after being expanded;

FIG. 5 is a side view showing the movement of folding the stroller of the present invention; and

FIG. 6 is a side view of the stroller after being folded.

DETAILED DESCRIPTION OF THE PREFERRED EMBODIMENT

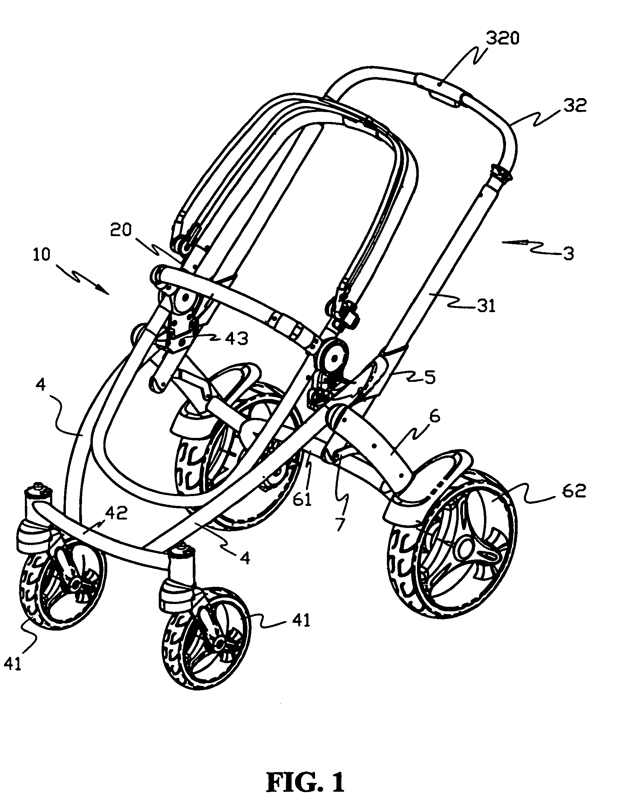

Shown in Figs. 1 - 4 is an embodiment of the foldable baby stroller frame 10 provides users to expand or fold as desired. The stroller includes a handle bar 3, a front support 4, a rear support 6, a linking rod 7 and a locking member 8, wherein the handle bar 3 comprises a lower tube 31 and a upper tube 32. It is better to have different size between the lower tube 31 and the upper tube 32, such as making a pipe size of the upper tube 31 smaller than the lower tube 32, so that the upper tube 32 can telescope with the lower tube 31 and expand or retract therein. An adjusting controller 320 is disposed at the upper tube 32 for users to adjust the length to a suitable height.

A sliding sleeve 5 connects to upper end of the front support 4 and further telescopes with the lower tube 31 of the handle bar 3 to let the handle bar 3 slipping relatively with the sliding sleeve 5. In addition, the lower end of the front support 4 connects to a front wheel set 41; the front wheel set 41 includes a front transverse rod 42 for reinforcing its strength. In the present invention, a receiving base 43 is fixed inside the front support 4 for detachable connecting to a seat support frame 20, which accommodates children. The rear support 6 pivots to the front support 4 with its upper end with its lower end connecting to a rear transverse rod 61 and rear wheel set 62.

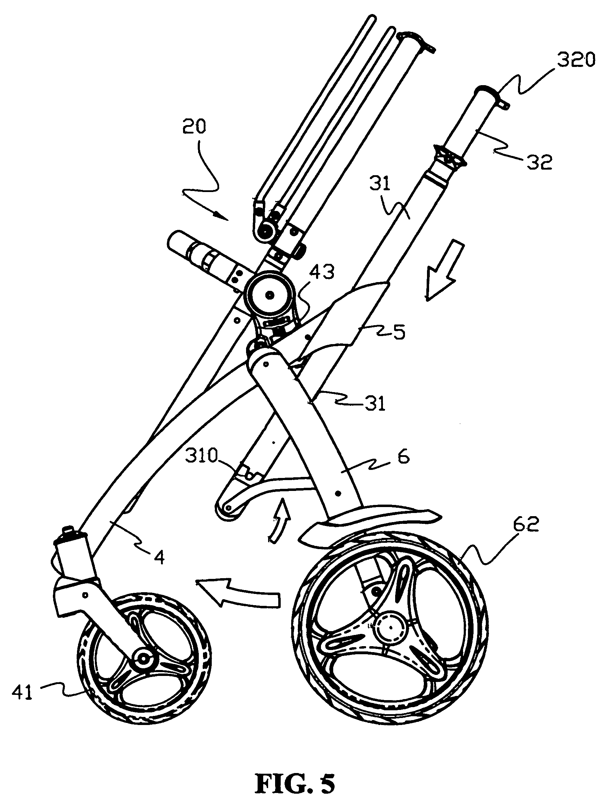

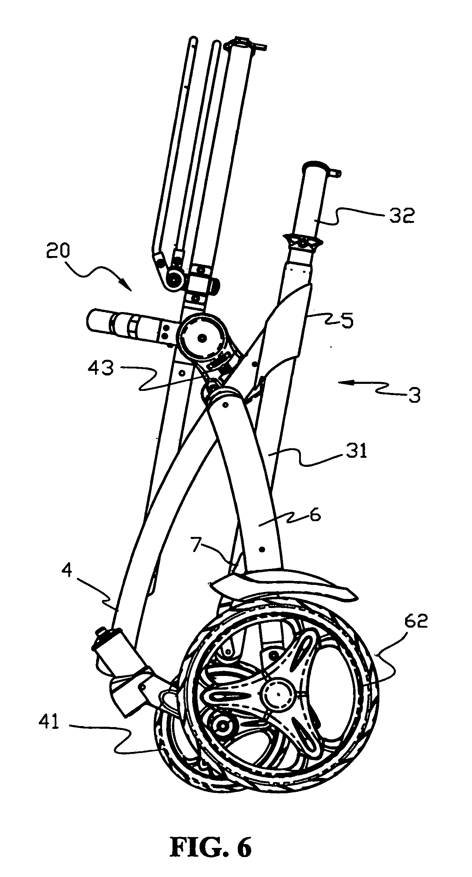

With reference to Figs. 5 and 6, a linking rod 7 pivots between the lower tube 31 of the handle bar 3 and the rear support 6. While folding the stroller 10, the handle bar 3 slides down relatively to the sliding sleeve 5. Since the linking rod 7 pivots between the lower tube 31 and the rear support 6, the rear support 6 is forced to rotate to draw close to the front support 4 by the linking rod 7 to be in a folded state when the handle bar 3 moves downward.

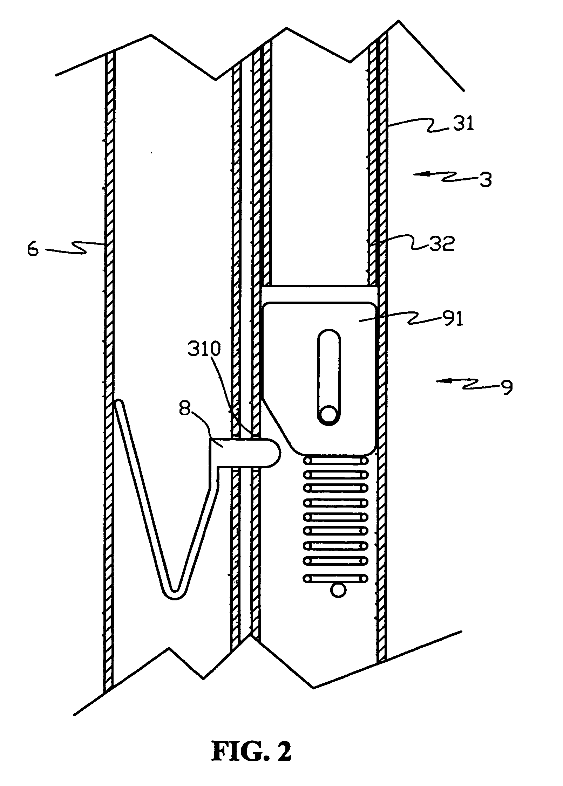

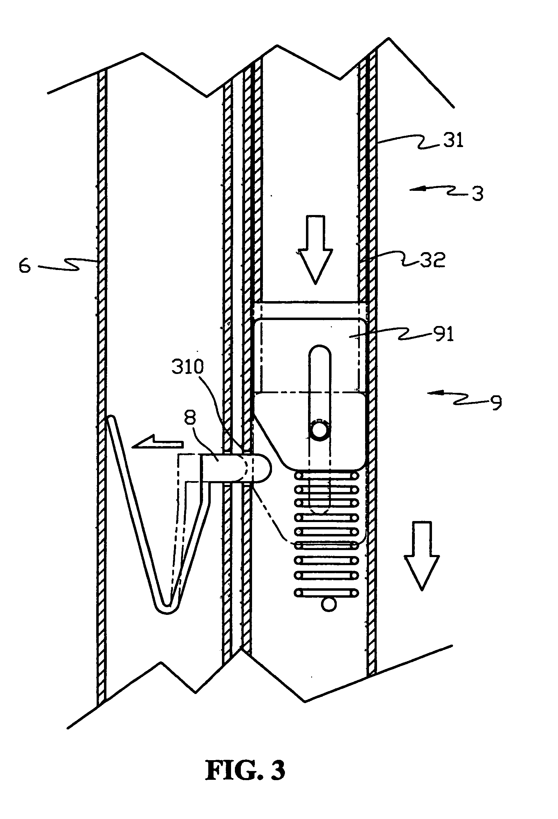

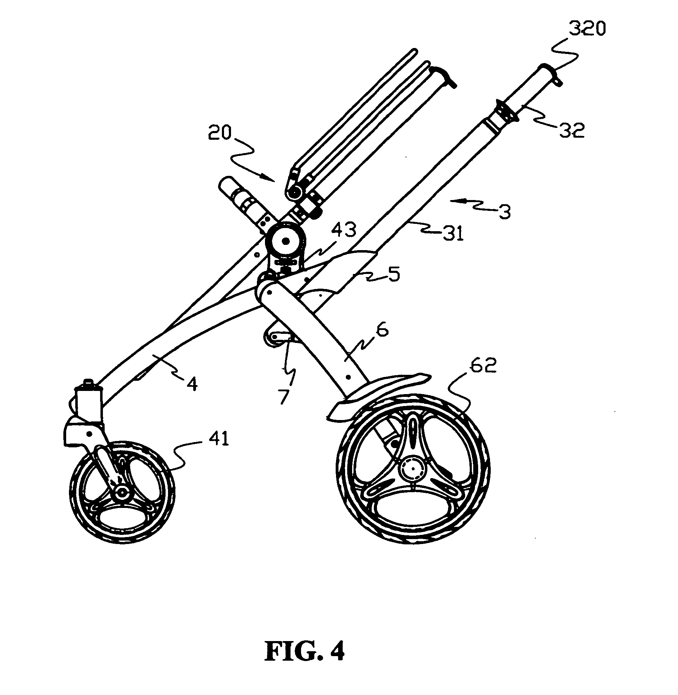

Referring to Figs. 2 and 3, a locking member 8 restrains at least two rod members such as the handle bar 3, the front support 4, the rear support 6 or the linking rod 7 so as to fix the stroller 10 to be in an expanded state as shown in Figs. 1 and 4. In the present invention, the locking member 8 can be arranged between the handle bar 3 and rear support 6 or between the handle bar 3 and the front support 4 in order to limit movement of the handle bar 3.

In the present invention, the locking member 8 is a leaf spring with a protrusion provided within the rear support 6. When the stroller is in an expanded state, the protrusion of the locking member 8 engages with a relative positioning aperture 310 disposed at the lower tube 31 of the handle bar 3. If the locking member 8 is disposed at the front support 4, the positioning aperture 310 should also be arranged at a relative position of the handle bar 3 for restraining movement of the handle bar 3. Therefore, the stroller is fixed automatically after being expanded.

Referring to Figs. 2 and 3, a releasing device 9 is in connection with the upper tube 32 of the handle bar 3 that is rotatable to disengage the locking member 8 from the positioning aperture 310. When the locking member 8 is disposed at the rear support 6, a reciprocation driving piece 91 can be disposed inside the lower tube 31 of the handle bar 3, and when the upper tube 32 of the handle bar moves down to the lowest place, the upper end of the upper tube 32 just pushes the driving piece 91 to disengage the locking member 8 from the positioning aperture 310 of the lower tube 31, so that the handle bar is free from restriction of the locking member 8; therefore, the handle bar can drive via the sliding sleeve 5 to rotate such rod members to draw close relatively to one another and so being collapsed.

## Claims

1. A foldable baby stroller frame (10), comprising:
- a handle bar (3);
- a front support (4), connected at its lower end to a front wheel set (41) and at its upper end to a sliding sleeve (5), said sliding sleeve (5) slidably accommodating the handle bar (3);
- a rear support (6), connected at its lower end to a rear wheel set (62) and pivotably connected with its upper end to the front support (4);
- a linking rod (7), pivotably connected with a first end thereof to the lower end of the handle bar (3) and with a second end thereof to the rear support (6); and
- a locking member (8), mounted on the stroller frame (10) adapted to prevent the handle bar (3) from being slided in the sliding sleeve when the stroller frame (10) is expanded;
**characterized in that**
- the handle bar (3) includes an upper tube (32), a lower tube (31) and an adjusting controller (320), wherein the upper tube (32) is telescopably slidably inserted into the lower tube (31) and is adjustable by the adjusting controller (320) in order to adjust the length of the handle bar (3) to a suitable height;
- the stroller frame (10) is provided with a releasing device adapted to release the engagement between the locking member (8) and the handle bar (3) by pushing the handle bar (3); and
- the releasing device includes a driving piece (91), which is reciprocably arranged inside the lower tube (31) in such a manner that pushing the handle bar (3) drives the driving piece (91) which thereupon pushes the locking member (8) to release the engagement between the locking member (8) and the handle bar (3).

2. A foldable baby stroller frame as claimed in claim 1, **characterized in that** the locking member (8) is disposed at the rear support (6), so that the locking member (8) locks the handle bar (3) to the rear support when the stroller frame (10) is expanded.

3. A foldable baby stroller frame as claimed in claim 1, **characterized in that** the locking member (8) is disposed at the front support (4) so that the locking member (8) locks the handle bar (3) to the front support (4) when the stroller frame (10) is expanded.

4. A foldable baby stroller frame as claimed in claim 2 or 3.
**characterized in that**
- the locking member (8) is a leaf spring with a protrusion; and
- a positioning aperture (310) is disposed at the handle bar (3); wherein the locking member (8) engages the positioning aperture (310) to fix the stroller after being expanded.

5. A foldable baby stroller frame as claimed in claim 4, **characterized in that** the positioning aperture (310) is disposed at the lower tube (31) of the handle bar (3).

6. A foldable baby stroller frame as claimed in claim 1, **characterized in that** the front support (4) is provided with a receiving base (43) adapted to be detachably connected to a seat support frame (20).

## Patentansprüche

1. Zusammenklappbarer Kinderwagenrahmen (10), der umfasst:
- eine Griffstange (3);
- einen vorderen Träger (4), der an seinem unteren Ende mit einem Vorderradsatz (41) verbunden ist und an seinem oberen Ende mit einer Gleithülse (5) verbunden ist, wobei die Gleithülse (5) die Griffstange (3) gleitend aufnimmt;
- einen hinteren Träger (6), der an seinem unteren Ende mit einem Hinterradsatz (62) verbunden ist und an seinem oberen Ende mit dem vorderen Träger (4) schwenkbar verbunden ist;
- einen Verbindungsstab (7), der an einem ersten Ende mit dem unteren Ende der Griffstange (3) und an einem zweiten Ende mit dem hinteren Träger (6) verbunden ist; und
- ein Verriegelungselement (8), das am Kinderwagenrahmen (10) montiert ist und dazu ausgelegt ist, ein Gleiten der Griffstange (3) in der Gleithülse zu verhindern, wenn der Kinderwagenrahmen (10) ausgeklappt ist;
**dadurch gekennzeichnet, dass**
- die Griffstange (3) ein oberes Rohr (32), ein unteres Rohr (31) und eine Einstellsteuereinheit (320) umfasst, wobei das obere Rohr (32) in das untere Rohr (31) teleskopartig gleitend eingesetzt ist und durch die Einstellsteuereinheit (320) einstellbar ist, um die Länge der Griffstange (3) auf eine geeignete Höhe einzustellen;
- der Kinderwagenrahmen (10) mit einer Freigabevorrichtung versehen ist, die dazu ausgelegt ist, den Eingriff zwischen dem Verriegelungselement (8) und der Griffstange (3) durch Verschieben der Griffstange (3) zu lösen; und
- die Freigabevorrichtung ein Antriebsteil (91) umfasst, das in dem unteren Rohr (31) hin und her beweglich angeordnet ist, so dass das Verschieben der Griffstange (3) das Antriebsteil (91) antreibt, das daraufhin das Verriegelungselement (8) anschiebt, um den Eingriff zwischen dem Verriegelungselement (8) und der Griffstange (3) zu lösen.

2. Zusammenklappbarer Kinderwagenrahmen nach Anspruch 1, **dadurch gekennzeichnet, dass** das Verriegelungselement (8) am hinteren Träger (6) angeordnet ist, so dass das Verriegelungselement (8) die Griffstange (3) am hinteren Träger verriegelt, wenn der Kinderwagenrahmen (10) ausgeklappt ist.

3. Zusammenklappbarer Kinderwagenrahmen nach Anspruch 1, **dadurch gekennzeichnet, dass** das Verriegelungselement (8) am vorderen Träger (4) angeordnet ist, so dass das Verriegelungselement (8) die Griffstange (3) am vorderen Träger (4) verriegelt, wenn der Kinderwagenrahmen (10) ausgeklappt ist.

4. Zusammenklappbarer Kinderwagenrahmen nach Anspruch 2 oder 3,
**dadurch gekennzeichnet, dass**
- das Verriegelungselement (8) eine Blattfeder mit einem Vorsprung ist; und
- eine Positionierungsöffnung (310) an der Griffstange (3) angeordnet ist, wobei das Verriegelungselement (8) mit der Positionierungsöffnung (310) in Eingriff gelangt, um den Kinderwagen zu fixieren, nachdem er ausgeklappt worden ist.

5. Zusammenklappbarer Kinderwagenrahmen nach Anspruch 4, **dadurch gekennzeichnet, dass** die Positionierungsöffnung (310) am unteren Rohr (31) der Griffstange (3) angeordnet ist.

6. Zusammenklappbarer Kinderwagenrahmen nach Anspruch 1, **dadurch gekennzeichnet, dass** der vordere Träger (4) mit einer Aufnahmebasis (43) versehen ist, die dazu ausgelegt ist, mit einem Sitzträgerrahmen (20) lösbar verbunden zu werden.

## Revendications

1. Châssis (10) pour poussette d'enfant pliable, comprenant :
- une barre-guidon (3) ;
- un support avant (4), relié à son extrémité inférieure à un jeu de roues avant (41) et à son extrémité supérieure à un manchon coulissant (5), ledit manchon coulissant (5) recevant en coulissement la barre-guidon (3);
- un support arrière (6), relié à son extrémité inférieure à un jeu de roues arrière (62) et relié en pivotement par son extrémité supérieure au support avant (4) ;
- une barre de liaison (7) reliée en pivotement par sa première extrémité sur l'extrémité inférieure de la barre-guidon (3) et par sa seconde extrémité sur le support arrière (6) ; et
- un élément de blocage (8), monté sur le châssis de poussette (10) et adapté à empêcher que la barre-guidon (3) coulisse dans le manchon coulissant quand le châssis de poussette (10) est déployé ;
**caractérisé en ce que**
- la barre-guidon (3) inclut un tube supérieur (32), un tube inférieur (31) et un contrôleur d'ajustement (320), de sorte que le tube supérieur (32) est inséré de manière télescopique et en coulissement dans le tube inférieur (31) et peut être ajusté par le contrôleur d'ajustement (320) afin d'ajuster la longueur de la barre-guidon (3) à une hauteur appropriée ;
- le châssis de poussette (10) est doté d'un dispositif de relâchement adapté à relâcher l'engagement entre l'élément de blocage (8) et la barre-guidon (3) en poussant sur la barre-guidon (3) ; et
- le dispositif de relâchement inclut une pièce d'entraînement (91), laquelle est agencée en va-et-vient à l'intérieur du tube inférieur (31) d'une manière telle qu'en poussant la barre-guidon (3), on entraîne la pièce d'entraînement (91), suite à quoi laquelle pousse l'élément de blocage (8) pour relâcher l'engagement entre l'élément de blocage (8) et la barre-guidon (3).

2. Châssis pour poussette d'enfant pliable selon la revendication 1, **caractérisé en ce que** l'élément de blocage (8) est disposé au niveau du support arrière (6), de sorte que l'élément de blocage (8) bloque la barre-guidon (3) sur le support arrière quand le châssis de poussette (10) est déployé.

3. Châssis pour poussette d'enfant pliable selon la revendication 1, **caractérisé en ce que** l'élément de blocage (8) est disposé au niveau du support avant (4) de sorte que l'élément de blocage (8) bloque la barre-guidon (3) sur le support avant (4) quand le châssis de poussette (10) est déployé.

4. Châssis pour poussette d'enfant pliable selon la revendication 2 ou 3,
**caractérisé en ce que**
- l'élément de blocage (8) est un ressort à lame avec une saillie ; et
- une ouverture de positionnement (310) est disposée sur la barre-guidon (3) ; et l'élément de blocage (8) engage l'ouverture de positionnement (310) pour fixer la poussette après avoir été déployée.

5. Châssis pour poussette d'enfant pliable selon la revendication 4, **caractérisé en ce que** l'ouverture de positionnement (310) est disposée au niveau du tube inférieur (31) de la barre-guidon (3).

6. Châssis pour poussette d'enfant pliable selon la revendication 1, **caractérisé en ce que** le support avant (4) est pourvu d'une base de réception (43) adaptée à être reliée de manière détachable à un châssis support de siège (20).
